**Europäisches Patentamt**

**European Patent Office**

**Office européen des brevets**

(19)

(11) Numéro de publication: **0 238 426
B1**

# FASCICULE DE BREVET EUROPEEN

(12)

(45) Date de publication du fascicule du brevet:
**25.10.89**

(21) Numéro de dépôt: **87420073.6**

(22) Date de dépôt: **13.03.87**

(51) Int. Cl.⁴: **B60G 21/04**, B60G 11/02,
F16F 1/36

(54) Suspension à lames, notamment pour véhicules automobiles.

(30) Priorité: **13.03.86 FR 8603780**

(43) Date de publication de la demande:
**23.09.87 Bulletin 87/39**

(45) Mention de la délivrance du brevet:
**25.10.89 Bulletin 89/43**

(84) Etats contractants désignés:
**DE ES FR GB IT**

(56) Documents cités:
**FR-A- 2 552 718
GB-A- 2 160 616
US-A- 1 384 146
US-A- 3 584 892**

(73) Titulaire: **Delery, Marc, 211 rue Benjamin Delessert,
F-69300 Caluire(FR)**

(72) Inventeur: **Delery, Marc, 211 rue Benjamin Delessert,
F-69300 Caluie(FR)**
Inventeur: **Mihailovic, Marc, 6, rue Francis de Préssensé,
F-69100 Villeurbanne(FR)**

(74) Mandataire: **Laurent, Michel et al, Cabinet LAURENT et
GUERRE B.P. 32, F-69131 Ecully Cedex(FR)**

ACTORUM AG

## Description

L'invention concerne un nouveau type de suspension pour véhicules automobiles notamment, permettant une utilisation normale (confort, tenue de route en courbe et en cap, vitesse..) dudit véhicule aussi bien sur route ou autoroute qu'une utilisation intensive en tout chemin ou en tout terrain et ce, sans aucune adaptation ou réglage spécifique.

Il est bien connu que les véhicules automobiles doivent comporter un système de suspension destiné à transmettre aux essieux le poids du véhicule et permettant l'amortissement des chocs dus aux inégalités du chemin de roulement.

En d'autres termes, une suspension est un ensemble de pièces reliant des éléments suspendus (caisse du véhicule) à des éléments non suspendus (roues), cet ensemble permettant d'amortir les chocs dus au déplacement des dites roues. A ce jour, les suspensions conventionnelles font appel à des ensembles comportant des leviers triangulés, à des ressorts à lames, à des ressorts hélicoïdaux, à des barres de torsion, à des coussins d'air, d'huile... . Par ailleurs, pour éliminer les oscillations et améliorer le confort et la tenue de route, les suspensions sont associées à des systèmes amortisseurs, hydrauliques par exemple, qui peuvent nécessiter pour le tout terrain l'empilement de lames de ressort, l'amortissement étant alors complété en partie par la friction entre les dites lames.

Les suspensions développées à ce jour donnent satisfaction quant au confort et à la tenue de route qu'elles procurent, mais il faut cependant reconnaître qu'elles sont d'une réalisation technique complexe et par suite, d'un coût élevé. Par ailleurs, lors d'une utilisation en tout terrain ou, dans le cas du franchissement d'un obstacle imprévisible sur une bonne route (cassis, nid de poule, passage à niveau, bordure de trottoir..), il est impératif que les éléments formant la suspension puissent "absorber" les chocs sans se rompre. Par suite, les éléments de suspension sont en général surdimensionnés, renforcés, ce qui non seulement alourdit le véhicule mais également augmente l'encombrement et le prix de tels ensembles. En outre, une partie de l'énergie n'est pas absorbée, ce qui entraîne des contraintes sur la coque et/ou le châssis dont la structure doit être renforcée pour résister à ces contraintes.

A ce jour, parmi tous les types de suspension utilisés, aucun ne donne entièrement satisfaction lorsque l'on souhaite réaliser un véhicule permettant une utilisation polyvalente route/terre, utilisation qui a tendance à se développer de plus en plus. En effet, pour une telle utilisation polyvalente, cela implique de réaliser une suspension qui, non seulement, permette d'absorber les chocs en utilisation sur terre, mais également de retrouver, immédiatement, sans aucun réglage ni aucune adaptation spécifique une excellente tenue de route sur asphalte. De telles conditions techniquement contradictoires, impliquent des épures de suspension qui se caractérisent notamment par de grands débattements, des ressorts à flexibilité progressive et des triangulations très longues qui ont certes l'avantage de maintenir la bonne géométrie des roues mais ont aussi l'inconvénient de transmettre à la coque ou au châssis des efforts amplifiés par la longueur de leur bras de levier.

A ce jour, le meilleur compromis pour une telle utilisation polyvalente est par exemple celui que l'on retrouve sur les véhicules développés par la société CITROEN et sur lesquels la suspension est du type "quatre roues indépendantes hydropneumatiques" selon laquelle les roues avant et arrière sont reliées par des conduits dans lesquels un mélange de liquide et de gaz est maintenu sous pression. Selon cette technique, lorsqu'une roue heurte une bosse ou tombe dans un trou, l'augmentation ou la diminution de pression fait descendre ou monter les autres roues de manière à maintenir ainsi l'assiette du véhicule la plus constante possible.

Parmi les autres principes envisagés pour réaliser des suspensions, il en est un qui était particulièrement séduisant par sa simplicité. Ce principe que l'on pourrait désigner par le terme "interactif" consiste à associer les roues du véhicule à la carrosserie au moyen d'un ensemble flexible qui prend appui contre les quatre roues et qui est monté sur le châssis de telle sorte que les contraintes exercées sur l'une des roues lors des déplacements soient répercutées sur les trois autres.

Cette solution, envisagée depuis au moins près de quarante ans, ainsi que cela ressort du FR-A-949 761 (exemple illustré par la figure 29 de ce brevet), consiste à utiliser un ensemble flexible constitué essentiellement de deux lames dites "longerons" ayant sensiblement la longueur de l'empattement du véhicule et de deux lames dites "traverses", articulées aux dits longerons à leurs extrémités, les roues étant reliés de manière conventionnelle aux extrémités des dites traverses.

Les traverses et longerons sont constitués de ressorts à lames qui sont articulées sur le châssis au milieu de leur longueur pour les traverses et en des points convenables et voisins du milieu de leur longueur pour les longerons. Les axes d'articulation des traverses sont parallèles à l'axe longitudinal du véhicule alors que ceux des longerons sont perpendiculaires au plan de symétrie du véhicule. Les extrémités des longerons et traverses sont articulées entre elles et ces articulations sont liées aux roues ou leurs dispositifs de suspension.

Par suite, lorsqu'une des roues subit un déplacement vertical, ce déplacement est répercuté aux autres roues de telle sorte que les mouvements des articulations d'une diagonale soient dans le même sens et ceux de l'autre diagonale en sens inverse. En conséquence, le plan du châssis s'oriente donc toujours parallèlement aux diagonales joignant les points d'appui, sans qu'il n'en résulte une modification quelconque sur les charges réparties sur les longerons et traverses (ressorts), donc sans aucun effort de gauchissement sur le véhicule.

Un tel type de suspension n'a cependant pas été développé industriellement à ce jour, ce qui peut s'expliquer pour différentes raisons.

Tout d'abord, jusqu'à l'apparition des matériaux composites (matériaux à base de fibres de verre, mousse de polyuréthane, colle structurelle, lame de caoutchouc et d'élastomère..), il aurait été nécessaire pour réaliser les longerons et également les traverses destinés à former le cadre entrant dans la réalisation d'une telle suspension, d'employer des lames métalliques qui, en fonction des caractéristiques à obtenir (raideur, flèche sous charge..),auraient conduit à des ensembles ayant un poids inacceptable.

Par ailleurs, dans les solutions antérieures, les traverses et longerons sont solidarisés à leurs extrémités respectives dans un seul et même plan. On réalise ainsi un véritable "cadre" flexible, oscillant et interactif qui, d'un point de vue industriel, n'est pas économique ni fiable et présente un certain nombre d'inconvénients parmi lesquels on peut citer :
- un mauvais guidage géométrique des roues dans trois directions (avant-arrière, latéral, haut-bas), qui nécessite d'ajouter différents éléments complémentaires pour assurer une triangulation et donc un guidage vertical correct ;
- le fait que si le plan général du cadre interactif est situé au-dessous de l'axe des roues, en cas de choc sur le train avant, la raideur transversale des traverses avant et arrière va s'ajouter à la raideur longitudinale des longerons alors que si le cadre passe au dessus de l'axe des roues, la caisse et/ou le plancher du véhicule va être surélevé dans des valeurs inacceptables compte-tenu de la cambrure des longerons ;
- le passage des arbres de transmission, des cardans, des carters de boite à vitesses et/ou de ponts est problématique étant donné que les traverses sont situées soit au dessus de ces éléments et donc au-dessus ou en avant de l'axe des roues, soit au dessous de ces éléments et donc en dessous ou en avant ou en arrière de l'axe des roues, ce qui implique de réaliser des éléments porte-moyeux subissant de fortes contraintes dues à des effets de porte-à-faux ;
- à l'avant, la flexibilité de la traverse sera diminuée de la valeur des distances séparant les longerons des porte-moyeux et des roues avant, soit environ d'une valeur de un tiers ;
- les lames, traverses et longerons, étant par définition déformables dans tous les plans, en virage, les roues se déplaceront en ripage par rapport à l'axe de symétrie du véhicule entraînant donc des braquages induits.

Récemment, dans le FR-A-2 552 718, il a été proposé un perfectionnement à ce type de suspension qui permet d'en améliorer l'efficacité, éventuellement de l'utiliser sans amortisseur additionnel et en facilite l'adaptation aux véhicules comportant une coque obtenue par moulage et notamment par thermoformage.

Pour ce faire, selon ce document, non seulement les longerons et traverses sont réalisés à partir d'un matériau composite qui autorise des poids extrêmement réduits en regard des raideurs nécessaires et qui joue lui-même le rôle d'amortisseur mais également, dans le cadre formé, les extrémités des traverses et des longerons sont solidarisées entre elles (et non plus articulées), les extrémités des traverses étant reliées aux roues de manière conventionnelle et le cadre flexible ainsi formé étant relié à la carrosserie du véhicule au moyen d'éléments de liaison déformables élastiquement (palier souples) disposés sensiblement suivant l'axe longitudinal et l'axe transversal du véhicule.

Un tel mode de réalisation permet de résoudre un certain nombre de problèmes par rapport aux enseignements de l'art antérieur, notamment du FR-A-949 761, par exemple en ce qui concerne l'amortissement des chocs, le poids de l'ensemble, mais il présente toujours les mêmes inconvénients que ceux résumés précédemment.

Or on a trouvé, et c'est ce qui fait l'objet de la présente invention, un perfectionnement à ce type de suspension qui permet de surmonter ces inconvénients et autorise une utilisation polyvalente (route normale ou tout terrain).

D'une manière générale, l'invention concerne donc une suspension pour véhicule, automobile notamment, suspension dans laquelle les roues du véhicule sont associées à la carrosserie au moyen d'un ensemble flexible constitué essentiellement de deux lames "longerons" ayant sensiblement la longueur de l'empattement du véhicule et de deux lames "traverses" dont les extrémités sont reliées aux porte-moyeux des roues, lesdits longerons et traverses étant reliés à la carrosserie du véhicule (ou de tout autre élément fixe par rapport à la dite carrosserie, par exemple carter de boite de vitesses, carter de différentiel ou de pont) au moyen d'éléments de liaison déformables élastiquement, la suspension selon l'invention se caractérisant par le fait que :
- les extrémités des longerons et des traverses sont situées dans deux plans espacés l'un de l'autre, ces deux plans pouvant être parallèles ou convergents ;
- au niveau du train avant, les extrémités des longerons sont montés de manière à permettre un déplacement longitudinal momentané sous l'effet d'un choc et éviter tout déplacement transversal ou angulaire ;
- au niveau du train arrière, les extrémités des longerons sont bloquées en torsion dans les porte-moyeux ;

De préférence, conformément à l'invention, les deux plans contenant les extrémités des longerons et des traverses sont situés de part et d'autre du plan contenant les axes des roues.

Grâce à cette disposition sur deux plans espacés des extrémités des lames, traverses et longerons, on évite ainsi la déflexion des lames traverses lorsque les longerons sont sollicités en roulis. Par suite, les déflexions des lames, traverses et longerons, étant indépendantes, ceci permet de diminuer le roulis et le roulis combiné au pompage.

Par ailleurs, une telle disposition sur deux plans espacés, situés comme dit précédemment de préférence de part et d'autre du plan déterminé par l'axe des roues, permet d'utiliser de façon optimale les caractéristiques d'amortissement interne propres aux matériaux composites constituant les lames longerons. En effet, lors d'un choc, par exemple sur le train avant ou sur une roue avant, la base des porte-moyeux recule et oscille par rapport à la verticale. Ainsi, la traverse avant n'est pratiquement pas sollicitée dans le plan horizontal alors que les lames des longerons absorbent en fléchissant et en se rétractant une partie importante de l'énergie qui n'est pas transmise au point d'ancrage des longerons et a fortiori à la coque et/ou au châssis.

Conformément à l'invention, les longerons sont solidaires à l'avant de bras rigides articulés à partir du plan de symétrie du véhicule et, à l'arrière, sont solidaires des porte-moyeux arrière dans lesquels ils sont encastrés afin de bloquer les mouvements de torsion produits par le déplacement des bras avants et de créer ainsi un couple de rappel en torsion. Pour assurer au train avant une amplitude momentanée de déplacement dans le plan longitudinal, les bras rigides solidaires des extrémités avant des longerons seront articulés au moyen de liaisons élastiques souples qui autorisent un déplacement angulaire, mais pratiquement aucun mouvement transversal qui serait susceptible de perturber la géométrie du train en virage et lors du ripage des roues avant. Par ailleurs, le blocage en torsion des extrémités arrières des longerons, par exemple par encastrement dans les porte-moyeux arrière, permet d'obtenir que les déplacements angulaires relatifs entre les bras rigides avant reliés à partir de l'axe de symétrie du véhicule aux roues avant et le plan horizontal d'encastrement dans les portemoyeux, génèrent des mouvements de flexion mais aussi de torsion sur les longerons. Un tel montage permet d'accentuer ainsi la progressivité des déflexions par combinaison avec la torsion. Par ailleurs, la tenue en torsion des longerons peut éventuellement être améliorée par la présence d'un profilé, en oméga par exemple, de profil évolutif à l'intérieur du composite.

A l'avant, les bras rigides solidaires des longerons et des porte-moyeux doivent être articulés le plus près possible du plan de symétrie du véhicule afin que ces points n'oscillent pas par suite des mouvements de roulis de la caisse. De préférence, l'articulation souple qui relie les bras rigides au châssis (ou à la coque), comportera des blocs amortisseurs (élastomère), disposés de part et d'autre de l'extrémité des bras et orientés de telle sorte que lesdits blocs soient inclinés par rapport à l'axe longitudinal du véhicule et soient orientés sur une ligne passant par les paliers permettant la liaison des longerons avec le châssis (ou la coque). Cette disposition particulière des bras rigides implique une épure de direction rigoureuse, les biellettes de direction étant munies à chaque extrémité de rotules, les rotules reliant la crémaillère aux biellettes devant être situées le plus près possible de l'axe du véhicule et le plus proche possible de l'axe d'oscillation de la lame traverse et ce, de manière à pouvoir osciller solidairement avec la traverse avant. La colonne de direction est de préférence montée coulissante pour suivre les mouvements d'oscillation de la crémaillère.

Dans certaines applications, les carters de ponts peuvent également pouvoir osciller solidairement avec les traverses. Dans l'hypothèse de roues arrière directrices, il en est de même.

La traverse avant étant désolidarisée des longerons assure le guidage géométrique des roues avant, notamment dans le plan horizontal en combinaison avec des tirants, poussants, ou des triangles permettent de conserver le guidage ; la platine d'ancrage des tirants ou des poussants est également solidaire des oscillations de la traverse.

La fixation des longerons et des traverses à la coque ou au châssis est réalisée d'une manière similaire aux enseignements du FR-A-2 552 718, c'est-à-dire au moyen de paliers souples leur permettant d'osciller dans toutes les directions. Eventuellement, une précontrainte est réalisée au moyen de butées en caoutchouc, ce qui permet de diminuer la raideur des lames. Le point d'ancrage des longerons à la coque est positionné en statique longitudinalement en fonction de la répartition des masses du véhicule (moteur avant ou arrière), ce point pouvant être réglable d'avant en arrière en fonction des variations de charges. Eventuellement, il pourrait être doté d'un dispositif de variation automatique suivant le pompage et les variations d'assiette.

Par ailleurs, il a été constaté, notamment lorsque les deux longerons étaient montés en convergence vers l'avant, qu'il était préférable de disposer le ou les plots de liaison de telle sorte que l'axe passant par ces plots soit orienté selon la force résultante lors d'un choc, c'est-à-dire, en général, en formant un angle voisin de 45° par rapport à l'axe longitudinal du véhicule.

Comme matériau utilisable pour la fabrication des lames longerons et traverses, on utilisera des matériaux qui non seulement présentent des caractéristiques de flexibilité (fonction ressort), mais également remplissent par eux-mêmes une fonction d'amortissement, c'est-à-dire sont susceptibles de dissiper l'énergie et les vibrations. De telles caractéristiques sont impératives en ce qui concerne les longerons alors que, en ce qui concerne les traverses, si une telle solution est avantageuse, il peut être éventuellement envisagé de réaliser ces traverses à partir de lames métalliques. Parmi ces matériaux pouvant remplir simultanément ces fonctions (flexibilité, ressort, amortissement), on peut citer les matériaux stratifiés obtenus par poltrusion, enroulement filamentaire ou par pressage, tels que ceux entrant dans la fabrication des skis et qui sont constitués d'un complexe comportant un noyau central autour duquel sont associées différentes couches de renforcement, notamment tissus de verre, d'aluminium, carbone, aramide.., ces différents éléments étant liés entre eux par une résine. Les caractéristiques des longerons et traverses seront déterminées en fonction du type de véhicule à réaliser, notamment de son poids, de la charge qu'il doit supporter, de l'amplitude des déplacements verticaux des roues.

L'invention et les avantages qu'elle apporte seront cependant mieux compris grâce aux exemples de réalisation donnés ci-après à titre indicatif et non limitatif et qui sont illustrés par les schémas annexés dans lesquels :

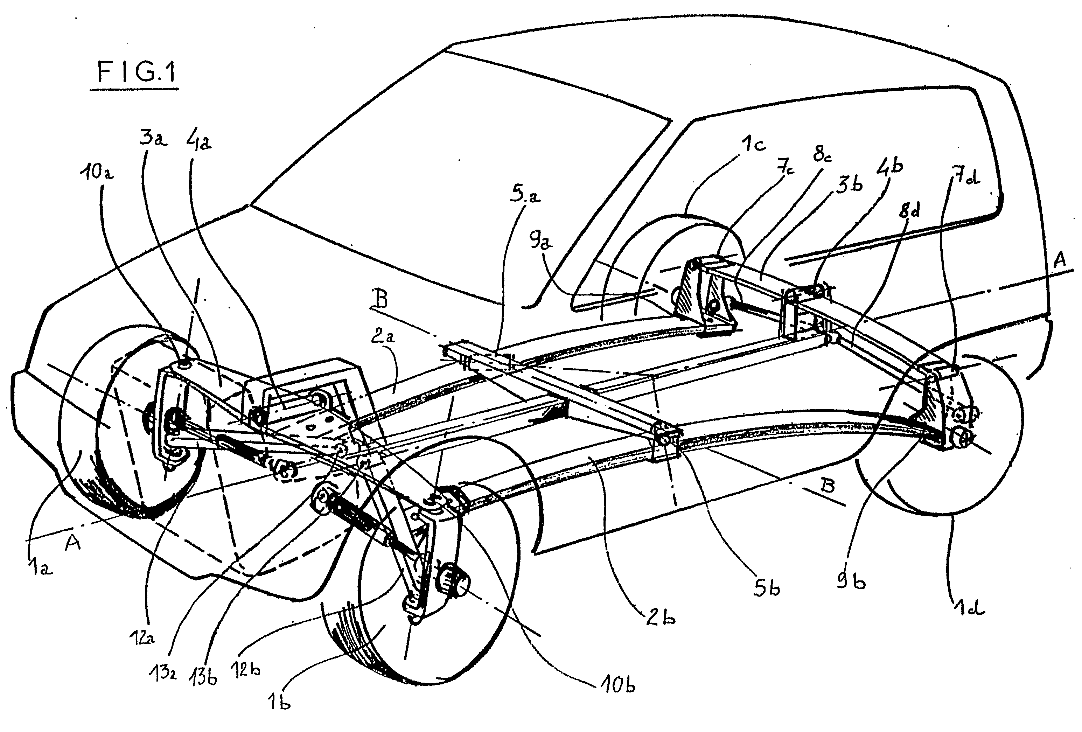

- la figure 1 est une vue schématique en perspective d'un véhicule comportant une suspension réalisée conformément à l'invention, la coque étant simplement esquissée par mesure de simplification ;

- la figure 2 est une vue de dessus de la suspension d'un tel véhicule ;
- la figue 3 est une vue frontale, partielle, montrant le train avant d'un véhicule réalisé conformément à l'invention ;

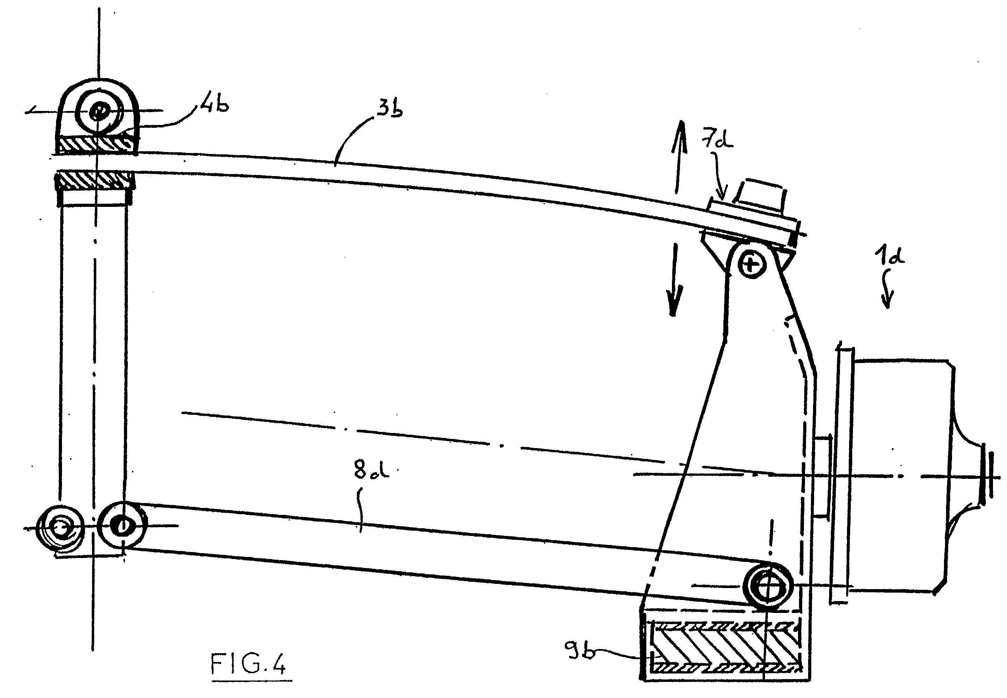

- la figure 4 est une vue de face partielle du train arrière d'un véhicule équipé d'une suspension conforme à l'invention ;
- la figure 5 est une vue de côté de l'ensemble d'un véhicule comportant une suspension selon l'invention ;
- la figure 6 est une vue de détail montrant un mode de fixation des traverses ;
- la figure 7 est une vue partielle montrant la manière dont sont fixées les extrémités des longerons, voire même des traverses.

Dans la suite de la description, par mesure de simplification, les mêmes éléments ou les éléments équivalents sont désignés par des references identiques, éventuellement affectées d'un indice.

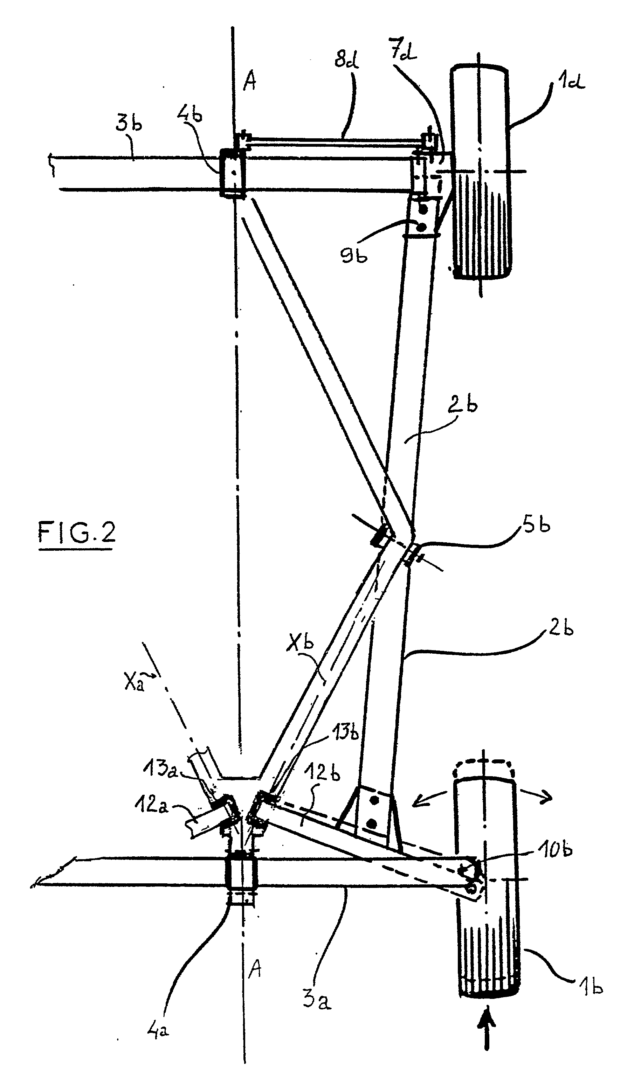

Si l'on se reporte aux figures annexées, la suspension conforme à l'invention est du type selon laquelle les roues (1a-1d) du véhicule sont associées à la carrosserie au moyen d'un ensemble flexible constitué es sentiellement de deux lames "longerons" (2a, 2b) ayant sensiblement la longueur de l'empattement du véhicule et de deux lames "traverses" (3a, 3b). Ces longerons (2a, 2b) et traverses (3a, 3b) sont reliés à la carrrosserie et/ou au châssis du véhicule, ou de tout autre élément, par exemple carter de pont, différentiel et/ou boite à vitesses, fixe par rapport à la dite carrosserie, au moyen d'éléments de liaison (4a, 4b), (5a, 5b) déformables élastiquement tels que des paliers souples qui sont disposés sensiblement sur l'axe longitudinal AA et l'axe transversal BB du véhicule. Lorsque les longerons (2a, 2b) sont légèrement convergents (voir figure 2), les plots latéraux formant les paliers souples (5a, 5b) sont disposés de préférence de telle sorte que l'axe qui passe par cesdits plots soit orienté selon la force résultante lors d'un choc, c'est-à-dire dans le cas présent en formant un angle voisin de 45° par rapport à l'axe longitudinal du véhicule. Ces plots peuvent être situés de part et d'autre et/ou au dessus et/ou au dessous des longerons.

En général, les paliers (4a,4b) sont disposés sensiblement selon l'axe longitudinal alors, qu'en ce qui concerne les paliers (5a, 5b), ils peuvent être plus ou moins décalés vers l'avant ou l'arrière en fonction de la répartition des charges.

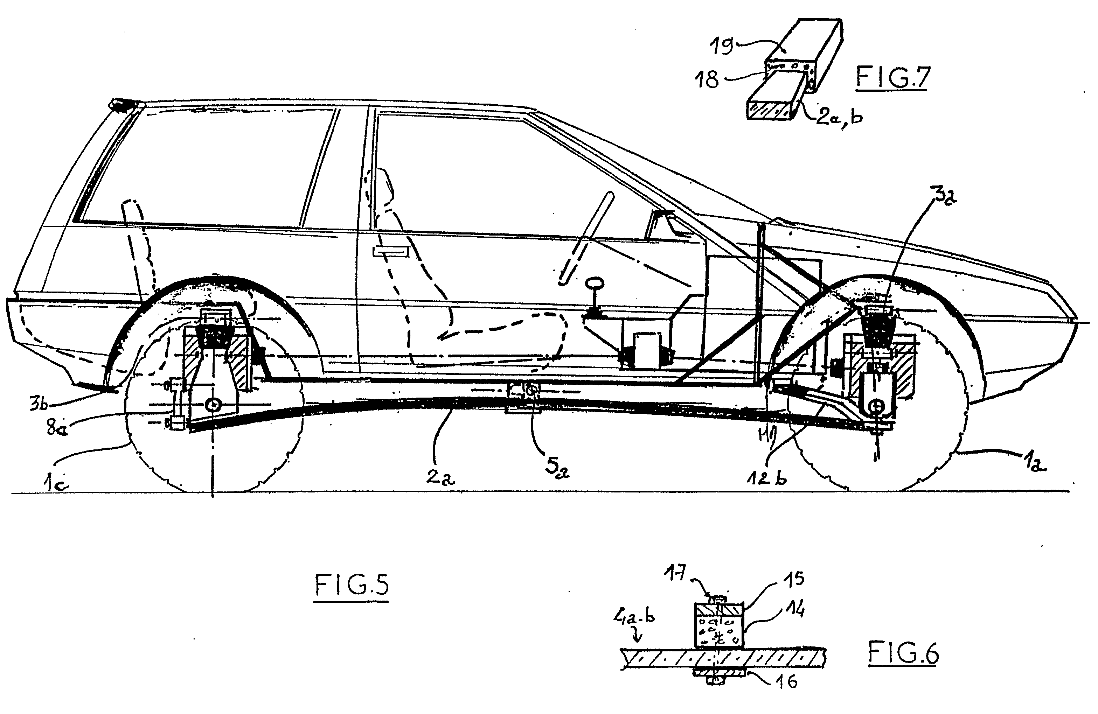

Ainsi que cela ressort de la figure 5, la fixation des traverses est obtenue au moyen d'un palier souple comportant un plot en élastomère (14) (ou tout autre élément amortisseur équivalent, tel que par exemple coussin à fluide liquide ou gazeux), ce plot (14) étant disposé au-dessus et/ou au-dessous de la traverse (4a) ou (4b) et étant maintenu entre deux plaques (15,16) au moyen de boulons latéraux (17).

Les longerons et traverses utilisés pour réaliser une telle suspension seront de préférence réalisés à partir de matériaux composites stratifiés, cambrés, de type connu, par exemple comparables à ceux utilisés pour la fabrication de skis, ces matériaux étant réalisés soit suivant la technique connue sous le nom de "voie humide", soit sous celle connue sous le nom de "injection in situ", soit par la technique "de pultrusion" courbe à section constante et épaisseur variable avec polymérisation en continu sous générateur à haute fréquence. Eventuellement, on pourrait utiliser des matériaux stratifiés obtenus par enroulement filamentaire. Les caractéristiques mécaniques (flexibilité,résistance, cambrure de moulage..) sont déterminées en fonction du type de véhicule, et notamment de la charge qu'il doit transporter.

Conformément à l'invention, et contrairement aux enseignements de l'art antérieur et notamment du FR-A-949 761 et du FR-A-2 552 718, les extrémités des longerons (2a, 2b) et des traverses (3a, 3b) ne sont pas reliés directement les uns aux autres de manière à former un cadre, mais sont au contraire disposées dans deux plans espacés l'un de l'autre, ces plans pouvant être parallèles ou non. De préférence, le plan passant par les extrémités des longerons et celui passant par les extrémités des traverses sont disposés de part et d'autre du plan contenant l'axe des roues.

La liaison des extrémités des longerons et traverses d'une part au moyeu des roues avant et arrière et, d'autre part, à la coque ou châssis est réalisée, conformément à l'invention, de la manière suivante. Si l'on considère le train arrière, la traverse (3b) est montée sur les porte-moyeux (7c, 7d) de chacune de ces roues, à leur partie supérieure, et est fixée selon l'axe de symétrie AA du véhicule par l'intermédiaire du palier souple (4b) ayant de préférence la structure illustrée à la figure 6 et qui a été décrite précédemment.

Des biellettes de guidage inférieures (8c, 8d) relient le châssis aux dits porte-moyeux et permettent d'assurer une bonne géométrie des déplacements de ces roues arrière lors de leur déplacement vertical.

Toujours au niveau du train arrière, les extrémités (9a) et (9b) des deux longerons (2a, 2b) sont fixées de manière rigide, par exemple au moyen de boulons aux porte-moyeux qui sont guidés dans un plan sensiblement vertical. Cette fixation des extrémités (9a) et (9b) des longerons (2a, 2b) est réalisée de telle sorte qu'elles soient maintenues dans un plan situé en dessous du plan contenant les extrémités de la traverse arrière (3b). Un tel ancrage des longerons dans les porte-moyeux des roues arrière, ancrage réalisé de manière rigide et sans aucune articulation, permet de les faire travailler aussi bien à la flexion qu'à la torsion. Cette fixation est obtenue d'une manière illustrée à la figure 7 en encastrant de préférence l'extrémité à l'intérieur d'un palier souple (18) maintenu dans un boitier fixe métallique (19). L'utilisation d'un tel palier souple est utile pour éviter un effet de "poinçon" sur les longerons.

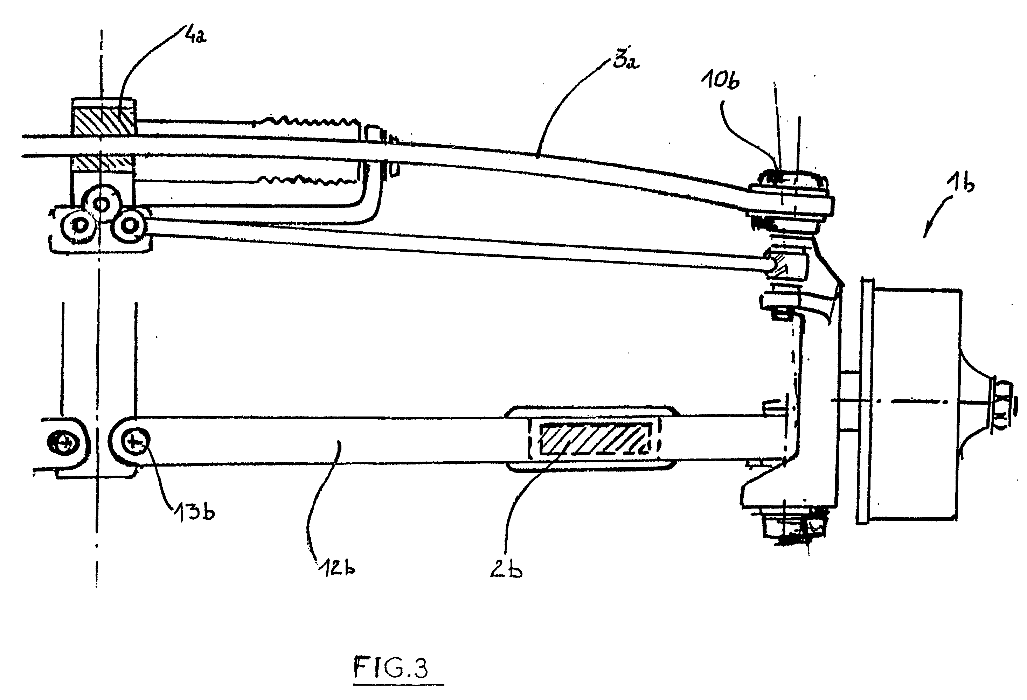

Concernant le train avant, la traverse (3a) est, quant à elle, montée sur le carter de pont ou la boite de vitesses ou le châssis ou la coque, par l'intermédiaire d'un palier souple (4a) (voir figure 6), disposé dans l'axe de symétrie AA du véhicule. Les extrémités (10a) et (10b) des traverses sont montées sur le porte-moyeux (voir figure 3), à sa partie supérieure, par l'intermédiaire d'une rotule. Par ailleurs, deux bras (12a, 12b) relient, d'une part, la coque (ou châssis) aux porte-moyeux des deux roues avant. Ces bras sont, ainsi que cela ressort des figures annexées, d'une part fixés sensiblement dans le plan de symétrie AA du véhicule par l'intermédiaire d'articulations élastiques (13a, 13b) et, d'autre part, fixés à chacun des porte-moyeux par l'intermédiaire d'une rotule inférieure. Les articulations élastiques (13a) sont de préférence constituées de plots disposés de part et d'autre de l'extrémité des bras (12a,12b) (voir figure 2). De préférence, ces articulations sont constituées de telle sorte que les plots qu'elle comporte soient, si l'on fait passer un axe imaginaire par ces plots, orientés suivant un axe (Xa) ou (Xb) passant par les plots de liaison (5a) ou (5b) reliant les longerons (2a) ou (2b) au châssis ou à la coque du véhicule.

L'ensemble crémaillère/biellettes de direction est fixé au support de la traverse (3a) de manière à pouvoir osciller solidairement avec cette traverse.

Enfin, les extrémités avant des deux longerons (2a, 2b) sont montées solidaires des deux bras de liaison (12a,12b) pour assurer une bonne géométrie. Pour permettre le braquage des roues avant (ou arrière) les deux longerons ne sont pas parallèles mais sont légèrement convergents vers l'axe de symétrie du véhicule.

Un tel type de suspension permet, par rapport aux solutions antérieures, non seulement de conserver une géométrie parfaite (épure) au train avant et au train arrière lors des déplacements des roues, mais également d'éviter que les mouvements d'oscillation de la coque et des mouvements combinés de roulis-pompage, notamment lors d'un virage à grande vitesse ne soient accompagnés par les bras. Ainsi, les lames "traverses" et "longerons" remplissent par eux-mêmes et naturellement, sans élément additionnel, les fonctions d'anti-roulis et d'anti-pompage. En conséquence, une telle suspension peut, dans le cas de véhicules, destinés essentiellement à un usage routier (voitures particulières ou équivalents) autoriser la suppression des dispositifs habituels employés sur de tels véhicules tels que les barres anti-roulis. Bien entendu, une telle suspension est particulièrement adaptée à la réalisation de véhicules tous terrains qui, en général, ne doivent pas comporter de barres anti-roulis et ce, pour améliorer l'adhérence.

De plus, avec une telle suspension conforme à l'invention, en cas de choc contre un obstacle (bord des trottoirs, rochers, nids de poule, passage à niveaux), la roue, le bras et les longerons peuvent, du fait des liaisons élastiques utilisées ainsi que des caractéristiques des lames "longerons" encaisser ce choc en reculant tout en permettant de retrouver pratiquement instantanément une géométrie rigoureuse du train avant après ce choc. Ainsi, à titre comparatif, des essais similaires ont été réalisés à partir d'un véhicule conforme à l'invention et d'un véhicule type "RENAULT R5". En faisant passer à la même vitesse les deux véhicules sur une cale identique fixée au sol, il a été constaté, en filmant ce passage à une vitesse 3000 images par seconde, que dans le cas de la R5, lors du passage sur la cale, le pneu encaissait une très grande énergie et se déformait à un point tel que l'arête de la cale venait pratiquement en contact avec la jante de la roue. En revanche, pour le véhicule conforme à l'invention, on note dès le début de la déformation du pneu un déplacement vertical de la roue par rapport au châssis et au sol. En conséquence, dans le véhicule type R5 dans lequel la fonction "suspension" est réalisée avec des barres de torsion, ces dernières n'agissent que lorsque les pneus ont atteint leur déformation limite. La roue subit un déplacement très important par rapport au reste du châssis, déplacement qui se répercute par la suite à l'ensemble de la coque du véhicule.

En revanche, dans le véhicule conforme à l'invention, un tel phénomène est supprimé, l'amortissement se faisant progressivement tandis que les longerons se déforment, accumulant l'énergie.

Enfin, ainsi que cela ressort clairement de la figure 5, il est possible, grâce à un tel type de suspension, d'obtenir un volume utile beaucoup plus important par le fait qu'il est possible d'éviter l'utilisation de ressorts hélicoïdaux et d'amortisseurs additionnels ainsi que d'avoir une zone très compacte pour le moteur, la boite de vitesses, les organes de transmission. De plus, l'absence de combinés ressort/amortisseur permet d'abaisser la hauteur de la ceinture de caisse et de l'aile par rapport au débattement vertical maximum de la roue. Il est donc possible de concevoir des véhicules dans lesquels les ailes et le capot sont très plongeants, ce qui permet d'améliorer le CX et l'esthétique.

Bien entendu, l'invention n'est pas limitée à l'exemple de réalisation décrit précédemment mais elle en couvre toutes les variantes réalisées dans le même esprit. Ainsi, si dans l'exemple de réalisation donné dans la présente description, les longerons et traverses ont une section parallélépipédique, il pourrait être envisagé de leur donner toute autre forme de section (variable ou non), en fonction de la réistance en flexion et/ou en torsion de la flexibilité.. que l'on désire leur conférer.

Par ailleurs, l'invention peut être mise en oeuvre sur tout type de véhicules, que ce soit des voitures particulières, réalisées en grande série pour une utilisation essentiellement sur route, que pour des véhicules à usage spécifique (mini-voitures, véhicules utilisés dans des usines, voitures de golf..) et ce, qu'ils soient à deux roues motrices (à traction ou à propulsion), à quatre roues motrices, voire même à trois roues motrices (deux à l'avant, une à l'arrière).

De plus, un tel type de suspension est particulièrement adapté pour la réalisation de véhicules à coque autoporteuse réalisée en matériau composite.

Enfin, il est possible de modifier la forme des lames "traverses", par exemple en les réalisant par moulage, et de leur donner une forme sensiblement en losange, ce qui leur permet alors d'assurer la fonction de guidage des roues sans adjonction de tirants ou poussants.

De plus, on ne sort pas du cadre de l'invention en supprimant éventuellement l'une des traverses (avant ou arrière), par exemple dans le cas de véhicules dont la prépondérance de poids est située sur l'avant ainsi que les roues motrices. Dans un tel cas, la traverse est bien entendu remplacée par des moyens permettant le guidage des roues (biellettes).

## Revendications

1/ Suspension pour véhicule, automobile notamment, dans laquelle les roues (1a, 1b, 1c, 1d) du véhicule sont associées à la carrosserie au moyen d'un ensemble flexible constitué esentiellement de deux lames "longerons" (2a,2b) ayant sensiblement la longueur de l'empattement du véhicule et de deux lames "traverses" (3a, 3b) dont les extrémités sont reliées aux porte-moyeux des roues, lesdits longerons et traverses étant reliés à la carrosserie du véhicule (ou de tout autre élément fixe par rapport à ladite carrosserie) au moyen d'éléments de liaison (4a, 4b - 5a, 5b) déformables élastiquement, caractérisée par le fait que :
- les extrémités des longerons (2a,2b) et traverses (3a,3b) sont situées dans deux plans espacés l'un de l'autre, ces deux plans étant parallèles ou non ;
- au niveau du train avant, les extrémités des longerons (2a,2b) sont montées de manière à permettre un déplacement longitudinal momentané sous l'effet d'un choc et éviter tout déplacement transversal ou angulaire ;
- au niveau du train arrière, les extrémités des longerons (2a,2b) sont bloquées en torsion dans les porte-moyeux.

2/ Suspension selon la revendication 1, caractérisée par le fait que les plans contenant les extrémités des longerons et les extrémités des traverses sont situés de part et d'autre du plan passant par l'axe des roues du véhicule.

3/ Suspension selon l'une des revendications 1 et 2, caractérisée par le fait qu'au moins les longerons (2a, 2b) et de préférence également les traverses (3a, 3b) sont à base d'un matériau composite stratifié qui non seulement présente des caractéristiques de flexibi lité (fonction ressort), mais également remplit par lui-même une fonction d'amortissement, c'est-à-dire est susceptible de dissiper en totalité ou en partie l'énergie et les vibrations.

4/ Suspension selon l'une des revendications 1 à 3, caractérisée par le fait que les longerons (2a,2b) et les traverses (3a, 3b) sont solidarisés à la coque ou au châssis au moyen de paliers souples (4a,4b-5a,5b) leur permettant d'osciller.

5/ Suspension selon la revendication 4, caractérisée par le fait que, notamment lorsque les deux longerons (2a,2b) sont montés légèrement en convergence vers l'avant, les plots de liaison des paliers (4a,4b) sont disposés de telle sorte que l'axe passant par ces plots soit orienté selon la force résultante lors d'un choc, c'est-à-dire formant un angle voisin de 45° par rapport à l'axe longitudinal du véhicule.

6/ Suspension selon la revendication 5, caractérisée par le fait que les paliers souples de liaison (4a, 4b, 5a,5b) comportent un bloc amortisseur (élastomère) (14) maintenu en contact avec le longeron ou la traverse au moyen de deux plaques (15,17), les extrémités des longerons étant encastrées entre des platines d'élastomère.

7/ Suspension selon l'une des revendications 1 à 5, caractérisée par le fait que le plan des extrémités des longerons (2a,2b) est situé sensiblement au dessous de l'axe des roues avant et arrière alors que le plan des extrémités des lames "traverses" (3a,3b) est situé quant à lui sensiblement au-dessus de l'axe desdites roues.

8/ Suspension selon l'une des revendications 1 à 7, caractérisée par le fait que les longerons (2a,2b) sont solidaires à l'avant de bras rigides (12a,12b) articulés à partir ou à proximité du plan de symétrie AA du véhicule et, à l'arrière, sont solidaires des porte-moyeux arrière dans lesquels ils sont encastrés afin de bloquer les mouvements de torsion des extrémités arrières créant ainsi un couple de rappel en torsion.

9/ Suspension selon la revendication 8, caractérisée par le fait que les bras rigides de liaison (12a, 12b) solidaires des extrémités avant des longerons (2a, 2b) sont articulés au moyen de liaisons élastiques souples autorisant un déplacement angulaire déterminé mais évitant tout déplacement transversal susceptible de perturber la géométrie du train en virage et lors du ripage des roues avant.

10/ Suspension selon la revendication 8, caractérisée par le fait que les bras rigides (12a, 12b) solidaires des longerons et des porte-moyeux sont articulés le plus près possible du plan de symétrie AA du véhicule, les biellettes de direction étant munies à chaque extrémité de rotules, les rotules reliant la crémaillère aux biellettes, étant situées le plus près possible de l'axe AA du véhicule et le plus proche possible de l'axe d'oscillation de la lame "traverse" et ce, de manière à pouvoir osciller solidairement avec la traverse avant (3a), la colonne de direction étant alors montée coulissante.

11/ Suspension selon l'une des revendications 1 à 10, caractérisée par le fait que des butées de précontrainte sont disposées sur ou sous les longerons (2a,2b) et/ou les traverses (3a, 3b) afin de modifier la raideur initiale desdits longerons ou traverses afin notamment de lutter contre les phénomènes de roulis.

## Patentansprüche

1. Aufhängung für Fahrzeuge, insbesondere für Kraftfahrzeuge, bei der die Räder (1a, 1b, 1c, 1d) des Fahrzeuges mit der Karosserie über einen elastischen Zusammenbau verbunden sind, der im wesentlichen aus zwei "Längsträger"-Blättern (2a, 2b), die etwa die Länge des Achsabstandes des Fahrzeuges aufweisen und aus zwei "Querträger"-Blättern (3a, 3b), deren äußere Enden an den Radnabenträgern der Räder befestigt sind, gebildet wird, wobei die Längsträger und die Querträger mittels deformierbaren, elastischen Verbindungselementen (4a, 4b — 5a, 5b) an der Karosserie des Fahrzeuges (oder an jeglichen anderen, bezüglich der Karosserie feststehenden Elementen) befestigt sind, dadurch gekennzeichnet,
— daß die äußeren Enden der Längsträger (2a, 2b) und die der Querträger (3a, 3b) in zwei voneinander beabstandeten Ebenen zum Liegen kommen, wobei diese Ebenen parallel oder auch nicht parallel verlaufen;

– daß auf Höhe des vorderen Fahrgestelles die äußeren Enden der Längsträger (2a, 2b) derart angebracht sind, daß unter der Einwirkung von Stößen eine vorübergehende längsverlaufende Verschiebung ermöglicht ist und daß jegliche querverlaufende oder winkelige Verschiebung verhindert ist; und – daß auf Höhe des hinteren Fahrgestelles die äußeren Enden der Längsträger (2a, 2b) in den Radnabenträgern gegen Verdrillung blockiert sind.

2. Aufhängung nach Anspruch 1, dadurch gekennzeichnet, daß die Ebenen, in denen die äußeren Enden der Längsträger und die äußeren Enden der Querträger liegen, beidseits der Ebene liegen, die durch die Radachsen des Fahrzeuges verläuft.

3. Aufhängung nach Anspruch 1 oder 2, dadurch gekennzeichnet, daß zumindest die Längsträger (2a, 2b) und vorzugsweise gleichermaßen die Querträger (3a, 3b) auf Basis eines Verbundschichtmaterials aufgebaut sind, das nicht nur elastische Eigenschaften (Federfunktion) aufweist, sondern das selbst eine Dämpfungsfunktion erfüllt, d.h., daß es in der Lage ist, Energie und Schwingungen teilweise oder vollständig zu verteilen.

4. Aufhängung nach einem der Ansprüche 1 bis 3, dadurch gekennzeichnet, daß die Längsträger (2a, 2b) und die Querträger (3a, 3b) über weiche Lager (4a, 4b – 5a, 5b), die ihnen ein Schwingen ermöglichen, an der Karosserie oder dem Chassis befestigt sind.

5. Aufhängung nach Anspruch 4, dadurch gekennzeichnet, daß insbesondere dann, wenn die beiden Längsträger (2a, 2b) in Vorwärtsrichtung leicht konvergierend angebracht sind, die Verbindungsstellen der Lager (4a, 4b) derart angeordnet sind, daß die Achse, die durch diese Verbindungsstellen läuft, entsprechend der Kraft ausgerichtet wird, die sich aus einem Stoß ergibt, d.h., daß sie unter einem Winkel von etwa 45° zur Fahrzeugachse verläuft.

6. Aufhängung nach Anspruch 5, dadurch gekennzeichnet, daß die weichen Verbindungslager (4a, 4b, 5a, 5b) einen Dämpfungsblock (14) (Elastomer) aufweisen, der durch zwei Platten (15, 17) in Kontakt mit dem Längsträger oder dem Querträger gehalten wird, wobei die äußeren Enden der Längsträger zwischen Halteplatten aus einem Elastomer eingebaut sind.

7. Aufhängung nach einem der Ansprüche 1 bis 5, dadurch gekennzeichnet, daß die Ebene, in der die äußeren Enden der Längsträger (2a, 2b) liegen, merklich unterhalb der vorderen und hinteren Radachsen liegt, wohingegen die Ebene der äußeren Enden der "Querträger"-Blätter (3a, 3b) ihrerseits merklich oberhalb der Achse der Räder liegt.

8. Aufhängung nach einem der Ansprüche 1 bis 7, dadurch gekennzeichnet, daß die Längsträger (2a, 2b) vorne mit steifen Armen (12a, 12b) fest verbunden sind, die auf Höhe oder in der Nähe der Symmetrieebene (AA) des Fahrzeuges gelenkig angebracht sind, und daß die Längsträger (2a, 2b) hinten fest mit den hinteren Radnabenträgern verbunden sind, in denen sie eingespannt sind, um Verdrillbewegungen der hinteren äußeren Enden zu blockieren, wodurch ein Torsionsrückführdrehmoment erzeugt wird.

9. Aufhängung nach Anspruch 8, dadurch gekennzeichnet, daß die steifen Verbindungsarme (12a, 12b), die mit den vorderen äußeren Enden der Längsträger (2a, 2b) fest verbunden sind, über weichelastische Verbindungsmittel gelenkig angebracht sind, die eine bestimmte Winkelverschwenkung ermöglichen, jedoch jegliche Querverschiebung, die störend in die Geometrie des Lenkbereichs des Fahrgestells und somit der Ausrichtung der Vorräder eingreifen würde, verhindern.

10. Aufhängung nach Anspruch 8, dadurch gekennzeichnet, daß die steifen Arme (12a, 12b), die mit den Längsträgern und den Radnabenträgern fest verbunden sind, so nah wie möglich neben der Symmetrieebene (AA) des Fahrzeuges gelenkig angebracht sind, wobei die Lenkstangen an die jeweiligen äußeren Gelenkenden angebracht sind, und wobei die Gelenke, die die Gelenkzahnstange mit den Lenkstangen verbindet, so nah wie möglich neben der Achse (AA) des Fahrzeuges und so nah wie möglich an der Schwingungsachse der "Querträger"-Blätter angeordnet sind, und zwar derart, daß diese fest verbunden mit dem vorderen Querträger (3a) schwingen können, wodurch dann die Lenksäule verschiebbar angebracht ist.

11. Aufhängung nach einem der Ansprüche 1 bis 10, dadurch gekennzeichnet, daß über oder unter den Längsträgern (2a, 2b) und/oder den Querträgern (3a, 3b) Vorspannwiderlager angeordnet sind, um die anfängliche Steifigkeit der Längsträger oder der Querträger näher zu bestimmen, insbesondere um gegen Schlingerphänomene anzugehen.

**Claims**

1. Suspension for vehicle, in particular an automobile vehicle, wherein the wheels (1a, 1b, 1c, 1d) of the vehicle are associated with the bodywork by means of a flexible assembly essentially, constituted by two "longitudinal" blades (2a, 2b) having substantially the length of the wheel base of the vehicule and by two "transverse" blades (3a, 3b) of which the ends are connected to the hub-holder elements of the wheels, said longitudinal and transverse blades being connected to the bodywork of the vehicle (or any other element which is fixed with respect to said bodywork), by means of elastically deformable connecting elements (4a, 4b – 5a, 5b), characterized in that:

– the ends of the longitudinal blades (2a, 2b) and transverse blades (3a, 3b) are located in two planes spaced apart from each other, these two planes being parallel or not;

– at the front of the chassis, the ends of the longitudinal blades (2a, 2b) are mounted so as to allow a momentary longitudinal displacement under the effect of a shock and to avoid any transverse or angular displacement;

– at the rear of the chassis, the ends of the longitudinal blades (2a, 2b) are blocked in torsion in the hub-holder elements.

2. Suspension according to the claim 1, characterized in that the planes containing the ends of the longitudinal blades and the ends of the transverse blades are located on either side of the plane passing through the axis of the wheels of the vehicle.

3. Suspension according to one of the claims 1 and 2, characterized in that at least the longitudinal blades (2a, 2b) and preferably also the transverse blades (3a, 3b) are based on a laminated composite material which non only presents characteristics of flexibility (spring function), but also performs per se a function of damping, i.e. is capable of dissipating all or part of the energy and the vibrations.

4. Suspension according one of the claims 1 to 3, characterized in that the longitudinal blades (2a, 2b) and the transverse blades (3a, 3b) are connected to the body-frame or chassis by means of supple bearings (4a, 4b – 5a, 5b) enabling them to oscillate.

5. Suspension according to the claim 4, characterized in that, particularly when the two longitudinal blades (2a, 2b) are mounted slightly in forward convergence, the connecting studs of the bearings (4a, 4b) are disposed so that the axis passing through these studs is oriented in the direction of the resultant force upon a shock, i.e. forming an angle close to 45° with respect to the longitudinal axis of the vehicle.

6. Suspension according one of the claims 1 to 5, characterized in that the supple connecting bearings (4a, 4b – 5a, 5b) comprise a damping block (elastomer) (14) maintained in contact with the longitudinal blade or the transverse blade by means of two plates (15, 17), the ends of the longitudinal blades being embedded between the elastomer plates.

7. Suspension according to one of the claims 1 to 5, characterized in that the plane of the ends of the longitudinal blades (2a, 2b) lies substantially below the axis of the front and rear wheels, whilst the plane of the ends of the transverse blades (3a, 3b) lies substantially above the axis of said wheels.

8. Suspension according one of the claims 1 to 7, characterized in that the longitudinal blades (2a, 2b) are fast at the front with rigid arms (12a, 12b) articulated from or in the vicinity of the plane of symmetry AA of the vehicle and, at the rear, are fast with the rear hub-holder elements in which they are embedded in order to block the movements of torsion of the rear ends thus creating a restoring torque in torsion.

9. Suspension according to the claim 8, characterized in that the rigid connecting arms (12a, 12b) fast with the front ends of the longitudinal blades (2a, 2b) are articulated by means of supple elastic links allowing a determined angular displacement but avoiding any transverse displacement capable of disturbing the geometry of the chassis in a bend and when the front wheels skid.

10. Suspension according to the claim 8, characterized in that the rigid arms (12a, 12b) fast with the longitudinal blades and the hub-holder elements are articulated as close as possible to the plane of symmetry AA of the vehicle, the steering rods being provided at each end with swivel joints, the swivel joints connecting the rack to the rods being located as close as possible to the axis AA of the vehicle and as close as possible to the axis of oscillation of the "transverse" blade, this so as to oscillate jointly with the front transverse blade (3a), the steering column then being mounted to slide.

11. Suspension according one of the claims 1 to 10 characterized in that prestress stops are disposed on or beneath the longitudinal blades (2a, 2b) and/or the transverse blades (3a, 3b) in order to modify the initial stiffness of said longitudinal or transverse blades in order, in particular, to oppose the phenomena of rolling.

FIG.1

EP 0 238 426 B1

FIG.2

FIG.3

EP 0 238 426 B1

FIG.4

EP 0 238 426 B1

FIG.7

19

18

2a,b

3a

3b

8a

1c

2a

5a

M1

12b

1a

FIG.5

17

15

14

4a.b

16

FIG.6

EP 0 238 426 B1